# EUROPEAN PATENT APPLICATION

(11) **EP 2 472 145 A1**
(43) Date of publication of application: **04.07.2012**
(21) Application number: 11759410.1
(22) Date of filing: 23.03.2011
(51) Int. Cl.: F16H 55/06, B29C 45/14, B29C 45/26, B29L 15/00

(54) **GEAR**

(30) Priority: 24.03.2010 JP 2010067978
(71) Applicant: JTEKT Corporation, Osaka-shi, Osaka 542-8502 (JP)
(72) Inventor: WAKUGAWA, Yuji, Osaka-shi Osaka 542-8502 (JP)
(74) Representative: TBK
(86) International application number: PCT/JP2011/056902
(87) International publication number: WO 2011/118605

(57) **Abstract**

A gear (27; 27A; 27B; 27C) includes: an annular metal core (28; 28A; 28B) having a recess (37; 67: 37B) provided in a first side face (34) thereof; and an annular resin member (29) molded on the metal core (28; 28A; 28B) as covering an outer peripheral surface (32) of the metal core (28; 28A; 28B) and the first side face (34) of the metal core (28; 28A; 28B) and having teeth (46) provided on an outer peripheral surface thereof by injecting a resin material toward the recess (37; 67; 37B).

## Description

### TECHNICAL FIELD

The present invention relates to a gear.

### BACKGROUND ART

A worm wheel to be used as a gear for a decelerator of an automotive electric power steering system, for example, includes an annular metal core, and an annular synthetic resin member provided around the metal core and having teeth on an outer periphery thereof for reduction of noise. It is proposed to define a molten resin flow channel between a recess provided in the metal core of the gear and a part of a mold inserted in the recess for capturing cold slugs when the synthetic resin member of the gear is formed by injection molding (see, for example, PTL 1).

### CITATION LIST

### PATENT LITERATURE

PTL 1: JP2005-305779A

### SUMMARY OF INVENTION

### TECHNICAL PROBLEM

Since the molten resin flow channel is defined in the recess between the two components, i.e., between the metal core and the mold, in the injection molding as disclosed in PTL 1, the size of the flow channel significantly varies due to the combination accuracy of the metal core and the mold. As a result, the flow channel often has a significantly greater size than the cold slugs, failing to capture the cold slugs. In this case, the cold slugs are likely to reach a teeth formation area in the mold, thereby reducing the strength of the formed teeth.

### SOLUTION TO PROBLEM

To solve the problem described above, a gear according to the present invention includes an annular metal core having a recess provided in a side face thereof, and an annular resin member molded on the metal core as covering an outer peripheral surface of the metal core and the side face of the metal core and having teeth provided on an outer peripheral surface thereof by injecting a resin material toward the recess.

### BRIEF DESCRIPTION OF DRAWINGS

FIG. 1 is a schematic diagram schematically showing the construction of an electric power steering system employing a gear according to a first embodiment of the present invention.
FIG. 2 is a sectional view of the gear of FIG. 1.
FIG. 3 is a side view of the gear of FIG. 2.
FIG. 4 is a sectional view of a metal core, a mold and the like observed when an intermediate product of a resin member of the gear of FIG. 2 is produced by injection molding.
FIG. 5 is an enlarged view of FIG. 4.
FIG. 6 is a sectional view of a gear according to a second embodiment of the present invention.
FIG. 7 is a side view of the gear of FIG. 6.
FIG. 8 is a sectional view of a metal core, a mold and the like observed when an intermediate product of a resin member of the gear of FIG. 6 is produced by injection molding.
FIG. 9 is an enlarged view of FIG. 8.
FIG. 10 is a major sectional view of a gear according to a third embodiment of the present invention.
FIG. 11 is a major sectional view of a gear according to a fourth embodiment of the present invention.
FIG. 12 is a major sectional view of a metal core, a mold and the like observed when an intermediate product of a resin member of the gear of FIG. 11 is produced by injection molding.

### DESCRIPTION OF EMBODIMENTS

Embodiments of the present invention will hereinafter be described in detail with reference to the attached drawings. These embodiments are directed to gears which are each applied to an automotive electric power steering system. The inventive gears may be applied to an apparatus other than the electric power steering system.

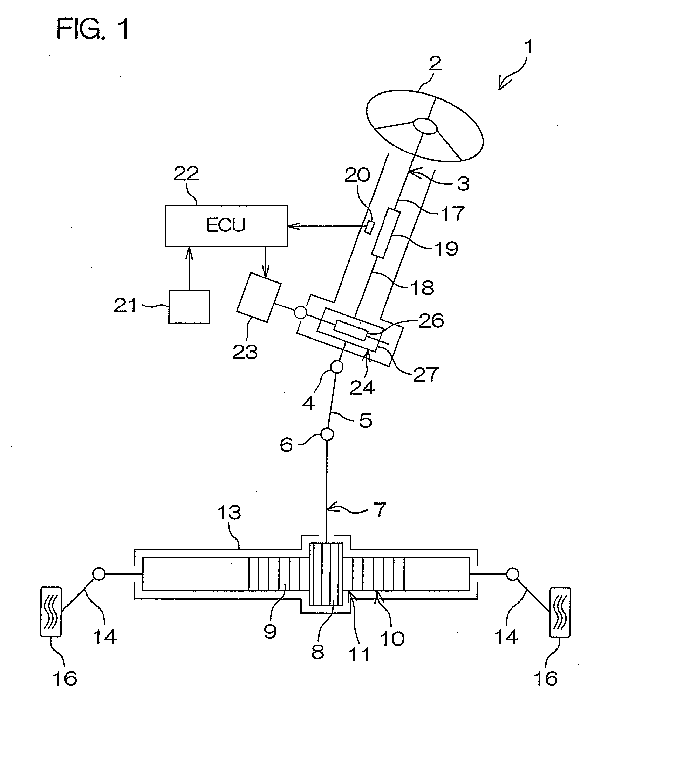

FIG. 1 is a schematic diagram schematically showing the construction of an electric power steering system employing a gear according to a first embodiment of the present invention. Referring to FIG. 1, the electric power steering system (EPS) 1 includes a steering shaft 3 connected to a steering member 2 such as a steering wheel, and an intermediate shaft 5 connected to the steering shaft 3 via a first universal joint 4. The electric power steering system 1 further includes a pinion shaft 7 connected to the intermediate shaft 5 via a second universal joint 6, and a rack shaft 10. The rack shaft 10 includes a rack 9 meshed with a pinion 8 provided adjacent an end of the pinion shaft 7, and serves as a steerable shaft extending transversely of a motor vehicle.

A rack-and-pinion mechanism including the pinion shaft 7 and the rack shaft 10 serves as a steering mechanism 11. The rack shaft 10 is supported in a linearly reciprocally movable manner via a plurality of bearings not shown in a rack housing 13 fixed to a vehicle body (not shown). A pair of tie rods 14 are connected to the rack shaft 10. The tie rods 14 are respectively connected to steerable vehicle wheels 16 via knuckle arms.

When the steering member 2 is operated to rotate the steering shaft 3, the rotation is converted into linear movement of the rack shaft 10 transverse to the motor vehicle by the pinion 8 and the rack 9. Thus, the steerable vehicle wheels 16 are steered.
The steering shaft 3 is divided into an input shaft 17 connected to the steering member 2 and an output shaft 18 connected to the pinion shaft 7. The input shaft 17 and the output shaft 18 are coaxially connected to each other via a torsion bar 19. When a steering torque is inputted to the input shaft 17, the torsion bar 19 is twisted to be resiliently deformed. Thus, the input shaft 17 and the output shaft 18 are rotated relative to each other.

A torque sensor 20 is provided, which detects a steering torque based on a relative rotational displacement between the input shaft 17 and the output shaft 18 via the torsion bar 19. Further, a vehicle speed sensor 21 is provided, which detects a vehicle speed. An ECU (Electronic Control Unit) 22 is provided as a controller. In addition, an electric motor 23 serving as an actuator for generating a steering force (a steering assist force in this embodiment) and a decelerator 24 which decelerates the output rotation of the electric motor 23 are provided.

Detection signals from the torque sensor 20 and the vehicle speed sensor 21 are inputted to the ECU 22. The ECU 22 controls the electric motor 23 for steering assist based on the results of the detection of the torque and the vehicle speed. The output rotation of the electric motor 23 is decelerated by the decelerator 24 to be transmitted to the pinion shaft 7, and converted into the linear movement of the rack shaft 10. Thus, a driver's steering operation is assisted.

The decelerator 24 includes a worm shaft 26 serving as a driving gear rotatively driven by the electric motor 23, and a worm wheel 27 serving as a driven gear meshed with the worm shaft 26. The worm wheel 27 is corotatably connected to the output shaft 18 of the steering shaft 3.
The gear according to this embodiment is employed as the worm wheel 27. In this embodiment, teeth of the worm wheel 27 are formed of a synthetic resin for reduction of noise of the gear of the decelerator 24 of the electric power steering system 1. In the following description, the worm wheel 27 is also referred to simply as gear 27.

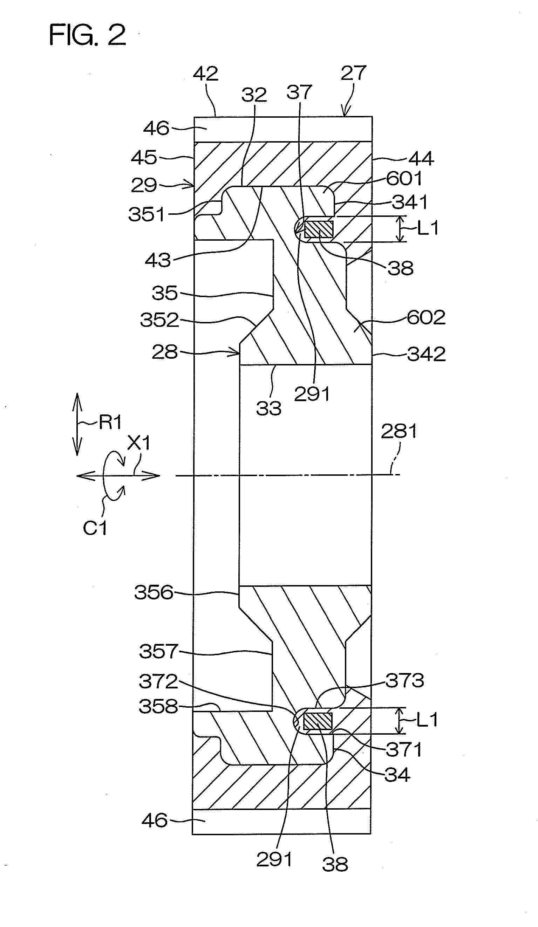

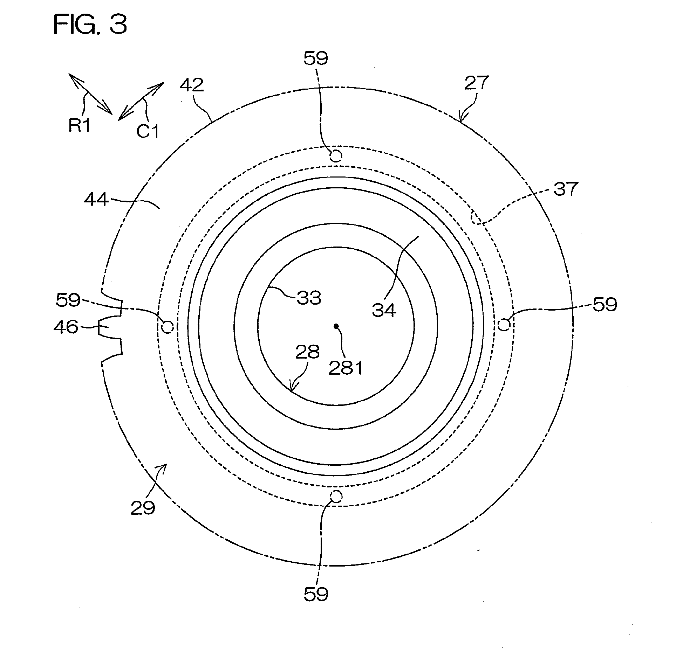

FIG. 2 is a sectional view of the gear 27 of FIG. 1. FIG. 3 is a side view of the gear 27 of FIG. 2. Referring to FIGS. 2 and 3, the gear 27 includes an annular metal core 28, and a resin member 29 molded on at least a part of the metal core 28 by injection molding. In this embodiment, the resin member 29 is annular to surround the metal core 28 and partly cover the metal core 28.

The metal core 28 and the resin member 29 are disposed coaxially with each other. The metal core 28 and the resin member 29 are connected to each other so as to be movable together in the axial direction X1 of the metal core 28 and rotatable together. In the following description, "in the axial direction X1, the circumferential direction C1 or the radial direction R1 of the metal core 28" will be sometimes referred to simply as "axially (X1), circumferentially (C1) or radially (R1)."
The metal core 28 is a metal member. The metal core 28 has an outer periphery (outer peripheral surface) 32, an inner periphery 33 which defines a center through-hole, and a pair of side faces 34, 35 facing away from each other axially (X1). First and second side faces 34, 35 are oriented opposite from each other axially (X1). The side faces 34, 35 each have an annular first portion 341, 351 covered with the resin member 29, and an annular second portion 342, 352 uncovered with the resin member 29. The second portions 342, 352 are disposed radially (R1) inward of the corresponding first portions 341, 351.

The first portions 341, 351 are covered with the resin member 29. The first portions 341, 351 are located on outer peripheral portions of the respective side faces 34, 35 of the metal core 28. The second portion 342 is located at a position axially (X1) outward of the first portion 341.
The metal core 28 includes an annular first part 601, and an annular second part 602. A first side face portion of the first part 601 includes the first portion 341. A second side face portion of the first part 601 includes the first portion 351. The first part 601 has an outer peripheral surface which defines the outer periphery 32 and is covered with the resin member 29. An annular groove 37 is provided in the first portion 341 of the first part 601.

The second part 602 is located radially (R1) inward of the first part 601. A first side face portion of the second part 602 includes the second portion 342. A second side face portion of the second part 602 includes the second portion 352, and is uncovered with the resin member 29. The first portion 351 (the second side face portion of the first part) projects outward with respect to a concavity 356 of the second portion 352 to be described later.

The annular groove 37 is provided as a gate opposing recess in the metal core 28. The annular groove 37 is provided in the first portion 341 of the first side face 34 of the metal core 28. The annular groove 37 has an annular shape defined about a center axis 281 of the metal core 28 as seen axially (X1). That is, the annular groove 37 is an annular groove formed in the first side face 34 of the metal core 28 coaxially with the metal core 28. The annular groove 37 extends entirely circumferentially (C1) and is endless. The depthwise direction of the annular groove 37 is parallel to the center axis 281 of the metal core 28.

The annular groove 37 has a first end portion 371 serving as an inlet to be opposed to gates, a second end portion 372 defining a bottom, and an intermediate portion 373 disposed between the first end portion 371 and the second end portion 372. The width L1 of the annular groove 37 is constant at the first end portion 371 and at the intermediate portion 373 as measured radially (R1), but is reduced at the second end portion 372. The first end portion 371 includes an opening of the annular groove 37.

The annular groove 37 is filled with a part 291 of the resin member 29. That is, the resin member 29 is produced by injecting a resin material toward the annular groove 37 and molding the resin material on the metal core 28 (annular groove 37) so as to cover the outer periphery 32 and the first portion 341 of the metal core 28. The part 291 of the resin member 29 contains cold slugs 38 resulting from the injection molding process. The cold slugs 38 occur when the injection molding process is performed with the use of pin-gate-type hot runners.

The cold slugs 38 are portions of the resin material injected in a solid state from the hot runners in the injection molding process as will be described later. The annular groove 37, i.e., the first end portion 371, the second end portion 372 and the intermediate portion 373, is entirely filled with the part 291 of the resin member 29. However, it is merely necessary to fill at least the first end portion 371 of the annular groove 37 with the part 291 of the resin member 29. That is, only a part of the annular groove 37 may be filled.

The metal core 28 has a concavity 356 formed in the second portion 352 of the second side face 35 thereof. The concavity 356 is a trench provided coaxially with the center axis 281 of the metal core 28. The concavity 356 is recessed toward the first side face 34. The concavity 356 includes a bottom portion 357, a cylindrical peripheral interior surface 358 extending axially (X1) from an outer periphery of the bottom 357. The bottom portion 357 has an annular shape, and its inner diameter portion is raised with respect to its outer diameter portion.

The resin member 29 has an outer periphery 42, an inner periphery 43, and a pair of side faces 44, 45 facing away from each other axially (X1). The inner periphery 43 of the resin member 29 is connected to the outer periphery 32 of the metal core 28. The outer periphery 42 of the resin member 29 has a plurality of teeth 46.
In this embodiment, the teeth 46 of the resin member 29 are formed by cutting an intermediate product (not shown). This arrangement will hereinafter be described. The teeth 46 may also be injection-molded without the use of the intermediate product, as will be described later, when the resin member 29 is injection-molded.

The intermediate product of the resin member 29 differs from the resin member 29 in that it does not have the teeth 46. The intermediate product of the resin member 29 has substantially the same construction as the resin member 29 except for this point.

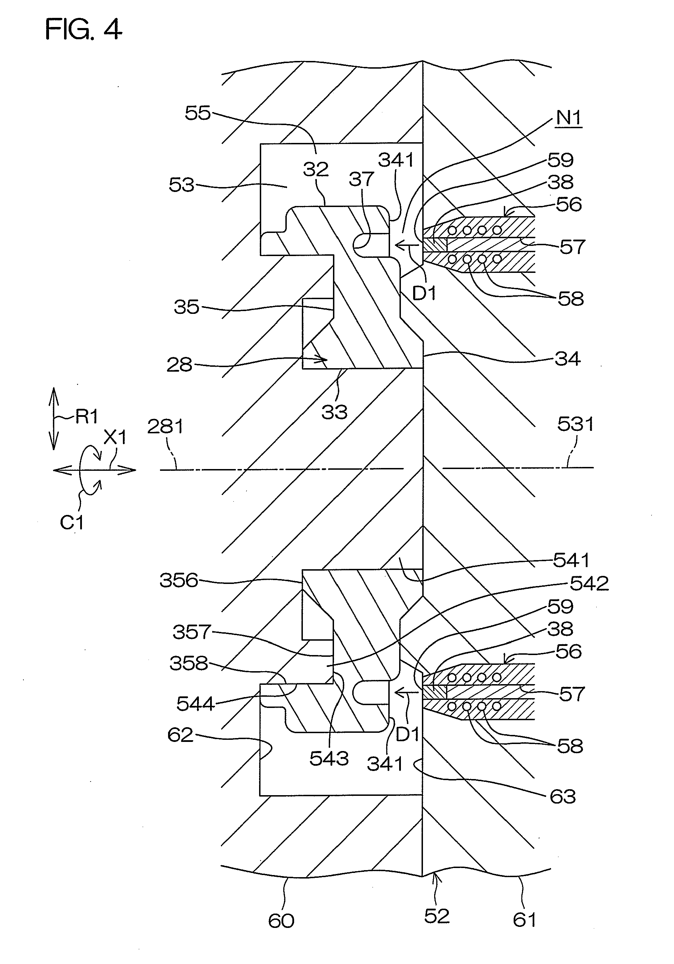

FIG. 4 is a sectional view of the metal core 28, a mold 52 and the like observed when the intermediate product of the resin member 29 of the gear 27 of FIG. 2 is produced by the injection molding. Referring to FIGS. 2 and 4, the intermediate product of the resin member 29 of the gear 27 is produced by injecting a melted resin into the mold 52 with the metal core 28 inserted in the mold 52. The mold 52 is used as a molding die for the insert molding. The mold 52 has an annular cavity 53 complementary in shape to the intermediate product of the resin member 29, and first and second retainers 541, 542 which retain the metal core 28 in the cavity 53. The cavity 53 includes a tooth formation portion forming cavity 55 for forming a tooth formation portion (more specifically, an outer peripheral portion of the intermediate product) to be formed into the teeth 46. The mold 52 includes a plurality of hot runners 56 arranged therein.

The first retainer 541 is disposed coaxially with a center axis 531 of the cavity 53 (corresponding to the center axis of the mold 52). The metal core 28 retained by the first retainer 541 is disposed coaxially with the cavity 53.
The hot runners 56 each have a tubular shape. The hot runners 56 each have a flow channel 57 through which a melted resin material is supplied to a gate 59, and a heater pipe 58 provided as a heater for heating the resin material in the flow channel 57. The flow channels 57 of the hot runners 56 each have an open end, which serves as the gate 59.

Referring to FIGS. 3 and 4, a plurality of gates 59, e.g., four gates 59, are provided. These gates 59 are arranged about the center axis 531 of the cavity 53 of the mold 52 equidistantly circumferentially of the cavity 53. In FIG. 3, the positions of the gates 59 observed when the gear 27 is inserted in the mold 52 are shown by one-dot-and-dash lines.
A circle on which the gates 59 are arranged is concentric with the annular groove 37 of the metal core 28 retained by the first retainer 541. The centers of the respective gates 59 are located on a circle defined about the center axis 531 of the cavity 53. The circle has a diameter that is equal to the center diameter of the annular groove 37 defined radially (R1). The gates 59 are merely required to be entirely opposed to at least a part of the annular groove 37. Therefore, the circle on which the gates 59 are arranged about the center axis 531 of the cavity 53 is not necessarily required to have the same diameter as the annular groove 37.

Referring to FIGS. 2 and 4, resin injection directions D1 in which the resin is injected from the respective gates 59 are parallel to the center axis 531 of the cavity 53. The gates 59 are opposed to the annular groove 37 provided in the first side face 34 of the metal core 28 in the injection directions D1 of the gates 59. The gates 59 entirely overlap the annular groove 37 as seen in the injection directions D1 of the gates 59. The gates 59 are located so as not to overlap the tooth formation portion forming cavity 55 of the mold 52. The gates 59 are spaced radially inward from the tooth formation portion forming cavity 55.

The resin material is heated to be melted by the heater pipes 58, and retained in the flow channels 57. On the other hand, the resin material is not sufficiently heated in distal end portions of the flow channels 57 by the heater pipes 58, so that the cold slugs 38 are generated in the distal end portions of the flow channels 57 in an injection-molding standby period. When the melted resin material is injection-molded, the cold slugs 38 are also injected in a solid state into the cavity 53.

The melted synthetic resin material is supplied to the hot runners 56 from an injection molding machine (not shown). The melted synthetic resin material is injected into the cavity 53 through the gates 59 of the respective hot runners 56. At this time, the cold slugs 38 are extruded into the cavity 53 of the mold 52 before the injection of the melted synthetic resin material.
The mold 52 includes a movable mold portion 60 and a stationary mold portion 61. The movable mold portion 60 has an annular recess 62 which defines a part of the cavity 53 when being combined with the stationary mold portion 61. A peripheral interior surface of the annular recess 62 functions to define the tooth formation portion forming cavity 55 described above. The first retainer 541 having a cylindrical shape and the second retainer 542 are provided in a center portion of the annular recess 62. The first retainer 541 is inserted within the inner periphery 33 of the metal core 28.

The second retainer 542 has an annular shape surrounding the first retainer 541. The second retainer 542 has an annular distal end face 543, which is kept in surface contact with the bottom portion 357 of the concavity 356 of the metal core 28. An outer peripheral surface 544 of the second retainer 542 is kept in surface contact with the peripheral interior surface 358 of the concavity 356.
The stationary mold portion 61 has an opposed surface 63 to be opposed to the movable mold portion 60. With the movable mold portion 60 and the stationary mold portion 61 combined together, the opposed surface 63 defines a part of the cavity 53. A gap N1 of a predetermined distance is defined between the opposed surface 63 of the stationary mold portion 61 and the first portion 341 of the first side face 34 of the metal core 28. The gap N1 is defined entirely circumferentially C1. The gap N1 functions as a flow passage through which the melted resin material flows. The gates 59 of the respective hot runners 56 serve as pin gates, which are present in the opposed surface 63 of the stationary mold portion 61 to face the gap N1 described above.

The metal core 28 is inserted in the mold 52 when the intermediate product of the resin member 29 is molded from the resin material. The metal core 28 functions as a part of the molding die when the intermediate product of the resin member 29 is molded. With the metal core 28 inserted as a mold insert in the mold 52, the mold is filled with the resin material by injecting the melted resin material (insert molding). Upon solidification of the resin material in the mold, the intermediate product of the resin member 29 is provided as a molded product. The resulting intermediate product covers the metal core 28. The metal core 28 and the intermediate product are combined together so as to be corotatable. Thereafter, the teeth 46 are formed in the outer peripheral portion of the intermediate product of the resin member 29 by cutting. Thus, the gear 27 is provided.

According to this embodiment, the cold slugs 38 extruded from the pin gates 59 of the respective hot runners 56 flow into the mold 52 when the resin material is injected into the cavity 53 in the injection molding process. Then, the cold slugs 38 enter the annular groove 37 provided in opposed relation to the gates 59 to be thereby captured in the annular groove 37. Thereafter, the melted resin flows behind the cold slugs 38 into the mold 52. With the cold slugs 38 confined in the annular groove 37, the mold 52 is filled with the melted resin. After the injection molding, the annular groove 37 of the metal core 28 is entirely filled with a part of the resin member 29 containing the cold slugs 38. With this arrangement, the cold slugs 38 which possibly affect the strength of the teeth 46 can be reliably confined in the annular groove 37. Thus, it is possible to reliably confine the cold slugs 38 in a desired position (annular groove 37), thereby reliably suppressing the reduction in the strength of the teeth 46 which may otherwise occur due to the cold slugs 38.

The annular groove (recess) is defined only by the metal core 28, i.e., by the single component, when the resin material is injected. This reduces variations in the size of the annular groove 37 among individual metal cores 28. As a result, the dimension of an element that determines the cold slug capturing ability (in this embodiment, the width L1 of the first end portion 371 of the annular groove 37) is prevented from becoming smaller or excessively greater than the size of the cold slug 38. Therefore, the cold slugs 38 can be reliably captured in the annular groove 37 irrespective of the individual metal cores 28. As a result, it is possible to prevent the cold slugs 38 from reaching the tooth formation portion forming cavity 55 of the mold 52, thereby reliably suppressing the reduction in the strength of the formed teeth 46.

This, for example, prevents significant reduction in the strength of the teeth 46 of the gear 27 or reduction in durability (early breakdown) which may otherwise occur due to the inclusion of the cold slugs 38. In mass production of the gear 27, the rate of rejection occurring due to the cold slugs 38 can be reduced.
The annular groove 37 is provided in the first side face 34 of the metal core 28. Therefore, the cold slugs 38 can be reliably captured at a remote position from the teeth 46. This more reliably suppresses the reduction in the strength of the teeth 46 which may otherwise occur due to the cold slugs 38.

Further, the annular groove 37 is located in the first portion 341 of the first side face 34. Thus, it is possible to mold the resin member 29 on the metal core 28 from the melted resin injected from the pin gates 59, while capturing the cold slugs 38 in the annular groove 37.
Further, the first portion 341 is located radially (R1) outward of the second portion 342. Thus, it is possible to cause the melted resin injected from the pin gates 59 to smoothly flow toward the outer periphery of the metal core 28, while capturing the cold slugs 38 in the annular groove 37.

Further, the second portion 342 is located at the position axially (X1) outward of the first portion 341 of the metal core 28. Thus, the opposed surface 63 of the movable mold portion 61 of the mold 52 can be brought into contact with the second portion 342. This makes it possible to retain a portion of the metal core 28 adjacent to the first portion 341 (annular groove 37) by the mold 52, thereby accurately positioning the annular groove 37 of the metal core 28 with respect to the mold 52.

Further, the second portion 352 of the second side face 35 can be reliably supported by the mold 52 in the injection molding of the resin member 29.
In addition, the metal core 28 can be accurately positioned radially (R1) with the second retainer 542 (annular portion ) of the mold 52 in contact with the peripheral interior surface 358 of the concavity 356.
The annular groove 37 has an annular shape defined about the center 281 of the metal core 28. This eliminates the need for positioning the annular groove 37 circumferentially (C1) with respect to the gates 59 in the injection molding. This facilitates the production of the gear 27. For example, the annular groove 37 is advantageous for a multiple-gate mold.

With the use of the pin-gate-type hot runners 56, the amount of the resin to be used can be reduced. Further, the intermediate product of the resin member 29 can be automatically cut at the gates 59 when being removed from the mold 52. This reduces the production costs.
Since there is no need to locate a part of the mold 52 in the annular groove 37 (recess), it is possible to simplify the mold 52 and to suppress the damage of the mold 52.

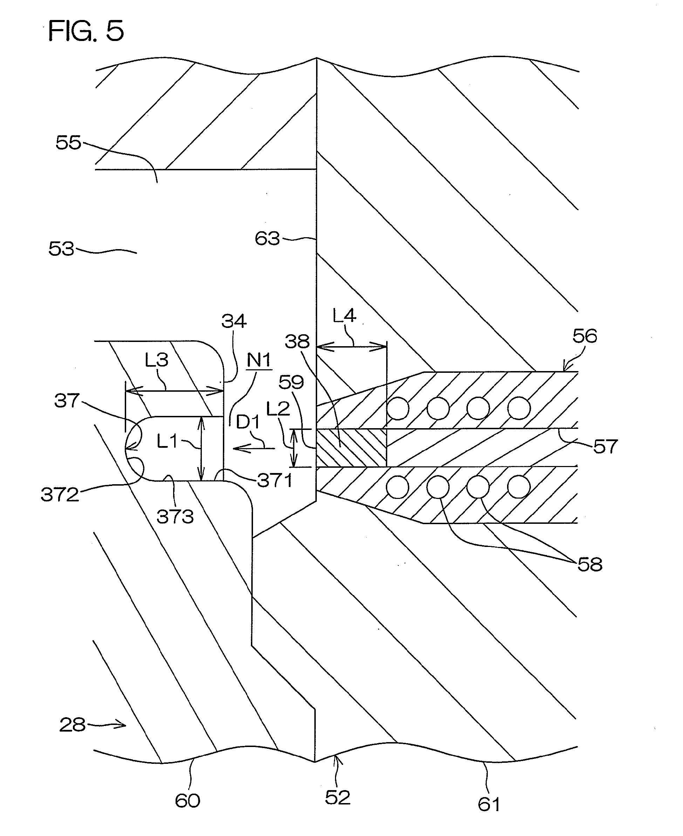

FIG. 5 is an enlarged view of FIG. 4. Referring to FIG. 5, the first end portion 371 of the annular groove 37 serves as the element determining the cold slug capturing ability of the recess. In this embodiment, the dimension of this element is defined as the width L1 of the first end portion 371 of the annular groove 37 (as measured perpendicularly to both the circumference and the depth of the annular groove 37). The width L1 is greater than the size of the gate 59, e.g., the diameter L2 of the gate 59 (L1>L2), but is not excessively great (is suitable for capturing the cold slugs). Thus, the cold slugs 38 easily enter the annular groove 37, but are not easily removed from the annular groove 37.

In order to prevent the removal of the cold slugs 38, the depth L3 of the annular groove 37 is preferably equal to or greater than the length L4 of a non-heating area in the distal end portion of the hot runner 56 (L3≥L4). The length L4 of the non-heating area is herein defined as a distance between the gate 59 and an end of the heater pipe 58 closer to the gate 59 as measured along the flow channel 57 of the hot runner 56.

The annular groove 37 is preferably formed by a forging process as a plastic working process. In this case, the working process costs are reduced. It is further preferred to produce the entire metal core 28 including the annular groove 37 by the forging process as the plastic working process. In this case, the annular groove 37 can be formed when the metal core 28 is produced. This further reduces the production costs.
The following variations of this embodiment are conceivable. Differences from the embodiment described above will hereinafter be mainly described. Since the variations each have substantially the same construction as the embodiment described above, like components are designated by like reference characters, and duplicate description will be omitted.

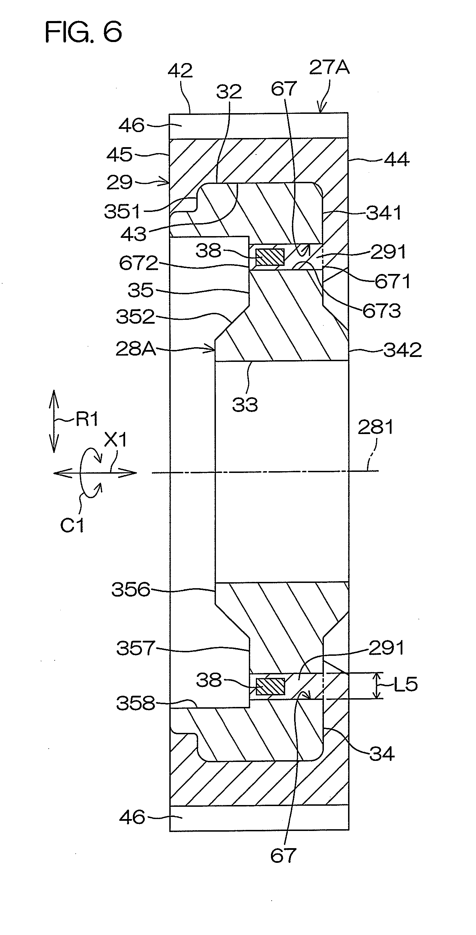

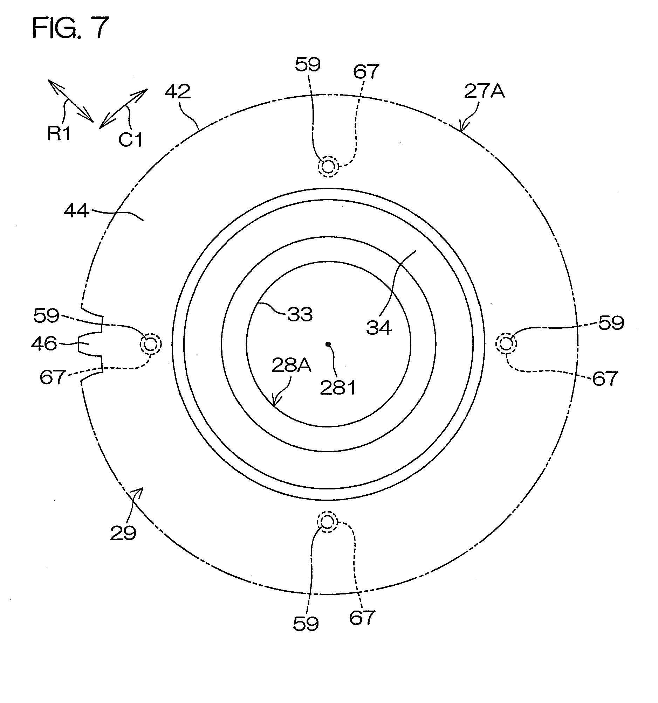

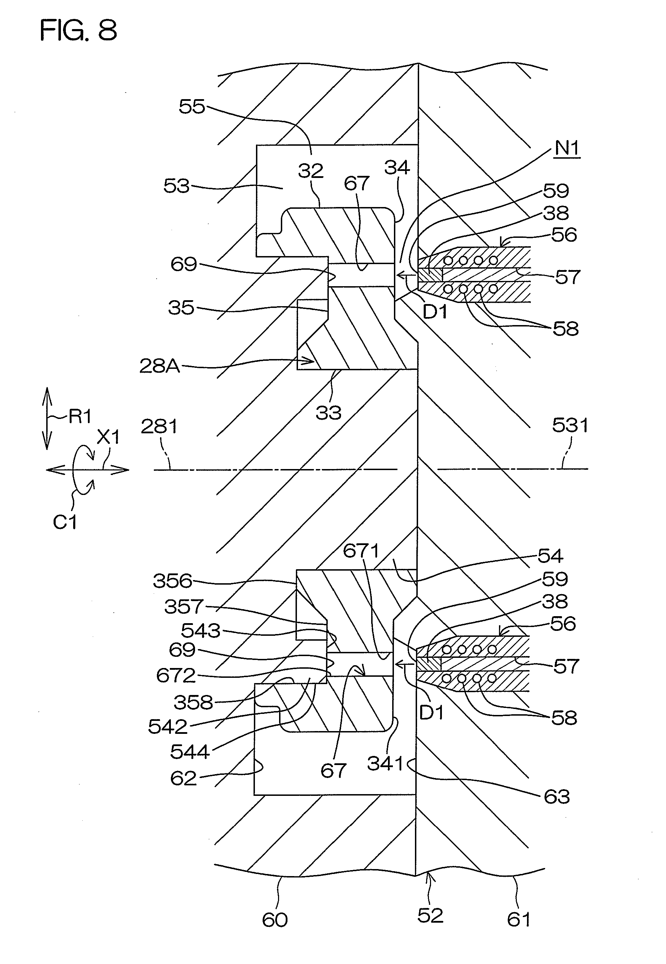

FIG. 6 is a sectional view of a gear 27A according to a second embodiment of the present invention. FIG. 7 is a side view of the gear 27A of FIG. 6. FIG. 8 is a sectional view of a metal core 28A, the mold 52 and the like observed when an intermediate product of the resin member 29 of the gear 27A of FIG. 6 is produced by the injection molding. The gear 27A of FIG. 6 is used instead of the gear 27 of FIG. 2. In the gear 27A of FIG. 6, the metal core 28A and through-holes 67 of FIG. 6 are respectively employed instead of the metal core 28A and the annular groove 37 of FIG. 2. The metal core 28A differs from the metal core 28 of FIG. 2 in the following points, and has substantially the same construction as the metal core 28 except for the following points. Therefore, components corresponding to those of the metal core 28 are designated by the same reference characters, and duplicate description will be omitted.

Referring to FIGS. 6 and 7, the gear 27A includes an annular metal core 28A, and a resin member 29 molded on at least a part (in this embodiment, a part) of the metal core 28A by the injection molding.
The metal core 28A has an outer periphery 32, an inner periphery 33, and a pair of side faces 34, 35 facing away from each other axially (X1). First and second side faces 34, 35 each have a first portion 341, 351 covered with the resin member 29, and a second portion 342, 352 uncovered with the resin member 29.

The metal core 28A includes a plurality of through-holes 67 provided as gate opposing recesses. The through-holes 67 extend axially (X1) through the metal core 28A, and each have a hollow cylindrical space, for example. The depthwise directions of the respective through-holes 67 are parallel to a center axis 281 of the metal core 28A. The centers of the respective through-holes 67 are located on a circle defined about the center axis 281 of the core metal 28A. The centers of the respective through-holes 67 located on the circle are equidistantly spaced from each other circumferentially (C1) of the metal core 28A. The centers of the respective through-holes 67 are arranged symmetrically radially (R1) of the metal core 28A.

The through-holes 67 each have a first end portion 671 serving as an inlet to be opposed to a gate, a second end portion 672, and an intermediate portion 673 disposed between the first end portion 671 and the second end portion 672. The through-holes 67 each extend through the metal core 28A between the first side face 34 and the second side face 35.
The through-holes 67 are each filled with a part 291 of the resin member 29. The part 291 of the resin member 29 contains a cold slug 38 resulting from the injection molding process. The through-holes 67, i.e., the first end portions 671, the second end portions 672 and the intermediate portions 673, are each entirely filled with the part 291 of the resin member 29.

The first end portions 671 of the respective through-holes 67 are defined in the first portion 341 of the first side face 34 of the metal core 28A, and covered with the resin member 29. The second end portions 672 are defined in the second portion 352 of the second side face 35 of the metal core 28A. A bottom portion 357 of a concavity 356 present around the second end portions 672 of the respective through-holes 67 in the second side face 35 is uncovered.
The resin member 29 has an outer periphery 42, an inner periphery 43, and a pair of side faces 44, 45 facing away from each other axially (X1). The outer periphery 42 has a plurality of teeth 46.

Referring to FIGS. 6 and 8, the mold 52 has closure portions 69 which respectively close the second end portions 672 of the through-holes 67. The closure portions 69 are defined on a distal end face 543 of a second retainer 542. With the metal core 28A retained by a first retainer 541, the closure portions 69 abut against the bottom portion 357 of the concavity 356 of the metal core 28A. Thus, the melted resin and the cold slugs 38 are prevented from flowing out of the through-holes 67 through the second end portions 672 of the through-holes 67.

The gates 59 are respectively opposed, in injection directions D1 of the gates 59, to the through-holes 67 provided in the first side face 34 of the metal core 28A retained by the first retainer 541. That is, the through-holes 67 are equal in number to the gates 59. A circle on which the centers of the gates 59 are located and the circle on which the centers of the through-holes 67 of the metal core 28A retained by the first retainer 541 are located are concentric with each other, and have the same diameter. The centers of the gates 59 are respectively properly positioned with respect to the centers of the through-holes 67 of the metal core 28A retained by the first retainer 541 circumferentially (C1) of the metal core 28A.

The gates 59 are merely required to be entirely opposed to parts of the corresponding through-holes 67. For example, the diameter of the circle on which the centers of the respective gates 59 are located about the center axis 531 of the cavity 53 is not necessarily equal to the diameter of the circle on which the centers of the respective through-holes 67 of the metal core 28A are located.
Referring to FIGS. 7 and 8, the gates 59 entirely overlap the corresponding through-holes 67 as seen in the injection directions D1 of the gates 59. With the metal core 28A retained in the mold 52, for example, the through-holes 67 are circumferentially (C1) equidistantly arranged about the center axis 531 of the cavity 53. At this time, the through-holes 67 are positioned circumferentially of the cavity 53 with respect to the corresponding gates 59 so as to be opposed to the corresponding gates 59. In FIG. 7, the positions of the gates 59 observed when the gear 27A is present in the mold 52 are each indicated by a one-dot-and-dash line.

Referring to FIGS. 6 and 8, cold slugs 38 extruded from the pin gates 59 of the hot runners 56 flow into the mold 52, for example, when the melted resin is injection-molded. Then, the cold slugs 38 are captured in the through-holes 67 located in opposed relation to the gates 59. At this time, the second end portions 672 of the through-holes 67 are closed with the closure portions 69 of the mold 52, so that the cold slugs 38 are confined in the through-holes 67. Then, the melted resin flows behind the cold slugs 38 into the mold 52 to fill the mold 52. At this time, the mold 52 is filled with the melted resin, while the cold slugs 38 are confined in the through-holes 67 serving as the recesses. After the injection molding, the through-holes 67 of the metal core 28A are entirely filled with the parts 291 of the resin member 29 containing the cold slugs 38.

With this arrangement, the cold slugs 38 which possibly affect the strength of the teeth 46 can be reliably confined in the through-holes 67. Thus, the cold slugs 38 can be reliably confined in desired positions, thereby reliably suppressing the reduction in the strength of the teeth 46 which may otherwise occur due to the cold slugs 38.
The recesses for capturing the cold slugs are defined only by the metal core 28A, i.e., by the single component. This reduces variations in the size of the through-holes 67 among individual metal cores 28A. As a result, the dimension of an element that determines the cold slug capturing ability (in this embodiment, the diameter L5 of the first end portion 671 of the through-hole 67) is prevented from becoming smaller or excessively greater than the size of the cold slug 38. Therefore, the cold slugs 38 can be reliably captured in the through-holes 67 irrespective of the individual metal cores 28A. As a result, it is possible to prevent the cold slugs 38, for example, from reaching the tooth formation portion forming cavity 55 of the mold 52, thereby reliably suppressing the reduction in the strength of the formed teeth 46.

The recesses, which are defined by the through-holes 67 extending through the metal core 28A, can be easily formed by a forging process. In the injection molding, the second end portions 672 of the through-holes 67 can be closed with the closure portions 69 of the mold 52. This prevents the cold slugs 38 from being removed through the second end portions 672 of the through-holes 67. As a result, the cold slugs 38 can be reliably captured in the through-holes 67. Further, the second end portions 672 of the through-holes 67 are closed with the closure portions 69 in the injection molding process. As a result, the second portion 352 of the metal core 28A of the gear 27A adjacent to the second end portions 672 of the through-holes 67 are uncovered after the molding. As compared with the bottomed holes, the through-holes 67 each have a greater depth. Therefore, the cold slugs 38 can be reliably captured in deeper portions of the through-holes 67 during the molding of the resin.

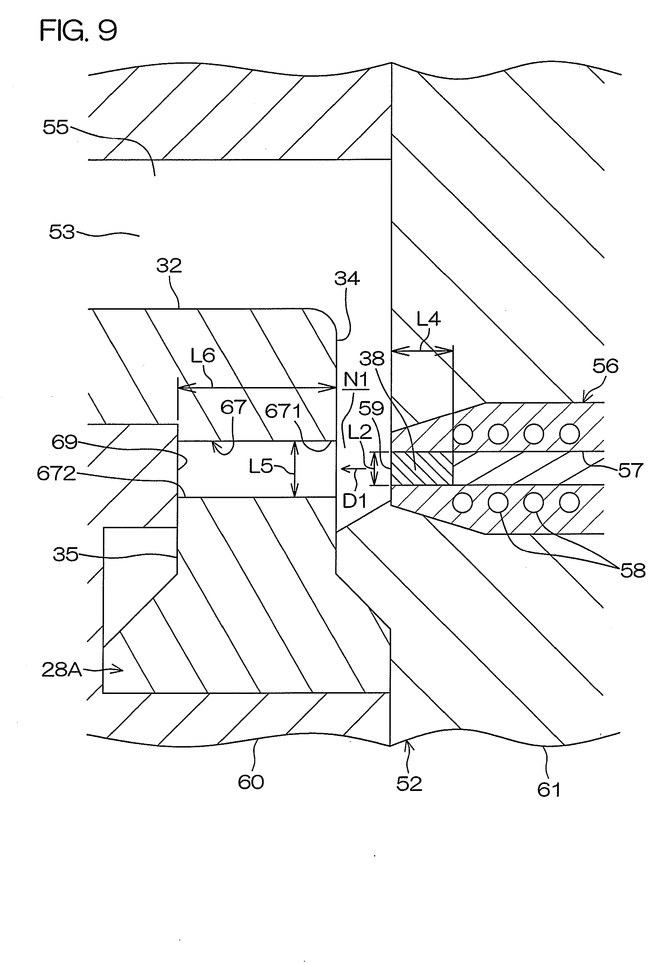

FIG. 9 is an enlarged view of FIG. 8. Referring to FIG. 9, the first end portions 671 of the through-holes 67 serve as the element determining the cold slug capturing ability. In this embodiment, the dimension of this element is defined by the diameter L5 of the first end portion 671. The diameter L5 is greater than the size of the gate 59, e.g., the diameter L2 of the gate 59 (L5>L2), but is not excessively great (is suitable for capturing the cold slug). Thus, the cold slugs 38 easily enter the through-holes 67, but are not easily removed from the through-holes 67.

In order to prevent the removal of the cold slugs 38, the depth L6 of a region of the through-hole 67 to be filled with the part 291 of the resin member 29 is preferably equal to or greater than the length L4 of a non-heating area in the distal end portion of the hot runner 56 (L6≥L4). In this embodiment, the depth L6 is herein defined as the entire length of the through-hole 67.
The through-holes 67 are preferably formed by a forging process as a plastic working process. In this case, the working process costs can be reduced. It is further preferred to produce the entire metal core 28A including the through-holes 67 as the recesses by the forging process as the plastic working process. In this case, the through-holes 67 can be formed together when the metal core 28A is produced. This further reduces the production costs.

In this embodiment, inner peripheral portions of the second end portions 672 of the through-holes 67 of the metal core 28A of the molded gear 27A may be uncovered with the resin member 29. This arrangement will be described later according to a fourth embodiment.

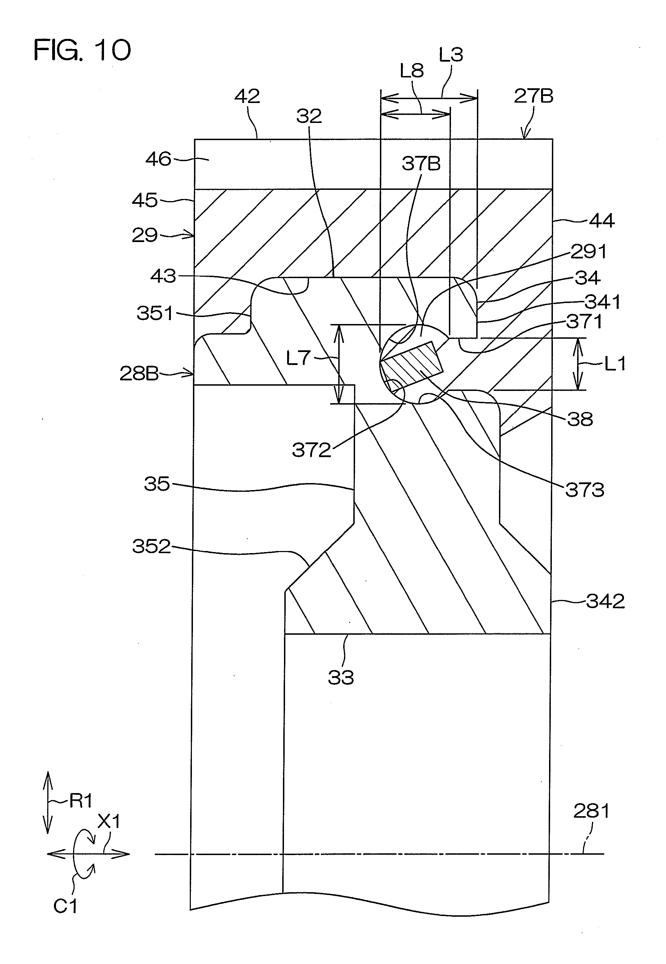

FIG. 10 is a major sectional view of a gear 27B according to a third embodiment of the present invention. In this embodiment, the gear 27B, a metal core 28B and an annular groove 37B (recess) shown in FIG. 10 are employed instead of the gear 27, the metal core 28 and the annular groove 37 (recess) shown in FIG. 2. The gear 27B and the gear 27 have substantially the same construction, but the gear 27B, the metal core 28B and the annular groove 37B respectively differ from the gear 27, the metal core 28 and the annular groove 37 of the corresponding arrangement of FIG. 2 in the following manner. Components of the gear 27B corresponding to those of the gear 27 are designated by the same reference characters as in FIG. 2, and duplicate description will be omitted.

Referring to FIG. 10, the gear 27B includes an annular metal core 28B, and a resin member 29 molded on at least a part (in this embodiment, a part) of the metal core 28B by injection molding. The metal core 28B has an annular groove 37B provided in a first side face 34 thereof as a gate opposing recess.
The annular groove 37B is filled with a part 291 of the resin member 29. The part 291 of the resin member 29 contains cold slugs 38. The cold slugs 38 are generated as a result of an injection molding process employing pin-gate-type hot runners. The annular groove 37B, i.e., a first end portion 371, a second end portion 372 and an intermediate portion 373, is entirely filled with the part 291 of the resin member 29.

An innermost space of the annular groove 37B is more spacious than a space in the first end portion 371. That is, the space in the intermediate portion 373 of the annular groove 37B is more spacious than the space in the first end portion 371 serving as an inlet of the annular groove 37B. For example, the width L7 of the intermediate portion 373 of the annular groove 37B is greater than the width L1 of the first end portion 371 of the annular groove 37B (L7>L1). Thus, the cold slugs 38 can be reliably retained in the innermost space of the annular groove 37B in the injection molding process. This reliably prevents the cold slugs 38 captured in the annular groove 37B from flowing out of the annular groove 37B.

Since the gear 27B has the annular groove 37B, it is possible to provide the effect of capturing the cold slugs 38 and the effect of reducing variations in the size of the first end portion of the recess as in the first embodiment described above.
The annular groove 37B for capturing the cold slugs has an annular shape defined about the center 281 of the metal core 28B. Therefore, there is no need to position the annular groove 37B with respect to the gates 59 circumferentially (C1) of the metal core 28B.

In order to reliably capture the cold slugs 38, the length L8 of the innermost space of the annular groove 37B is preferably equal to or greater than the length L4 of the non-heating area described above (see FIG. 5).

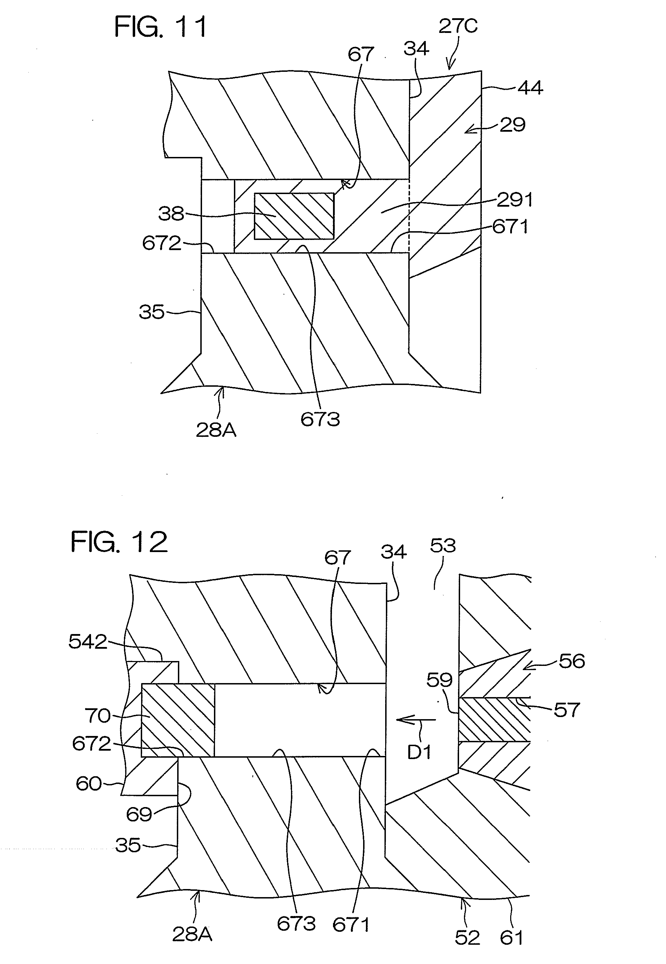

FIG. 11 is a major sectional view of a gear 27C according to the fourth embodiment of the present invention. FIG. 12 is a major sectional view of a metal core 28A, a mold 52 and the like observed when an intermediate product of a resin member 29 of the gear 27C of FIG. 11 is produced by injection molding. In this embodiment, the gear 27C shown in FIG. 11 is used as a recess instead of the gear 27 shown in FIG. 2. The gear 27C has substantially the same construction as the gear 27A shown in FIG. 6, except for the following points. Therefore, components of the gear 27C corresponding to those of the gear 27 are designated by the same reference characters in these figures, and duplicate description will be omitted.

Referring to FIGS. 11 and 12, inner peripheries of second end portions 672 of through-holes 67 of the molded gear 27C are uncovered with a resin member 29. In this case, positioning pins 70 serving as a positioning member are respectively inserted in the second end portions 672 of the through-holes 67 in the injection molding process. The positioning pins 70 are configured so as to position the metal core 28A circumferentially of a cavity 53 of a mold 52.

The positioning pins 70 each have a cylindrical shape, and are respectively located at positions opposed to the through-holes 67 axially of the cavity 53 of the mold 52. The positioning pins 70 are respectively positioned with respect to the gates 59 circumferentially and radially of the cavity 53. The number of the positioning pins 70 may be equal to or smaller than the number of the through-holes 67, and may be at least one. The pins 70 are fixed to the second retainer 542.

When the positioning pins 70 are respectively fitted in the second end portions 672 of the through-holes 67 with the metal core 28A retained in the mold 52, the first end portions 671 of the through-holes 67 are opposed to the corresponding gates 59 in the injection directions D1 of the gates.
By inserting the positioning pins 70 into the second end portions 672 of the respective through-holes 67, the through-holes 67 can be easily positioned with respect to the gates 59 circumferentially of the cavity 53 in the injection molding process.

With the positioning pins 70 respectively fitted in the second end portions 672 of the through-holes 67, the second end portions 672 are closed. As a result, the cold slugs 38 can be reliably captured in the through-holes 67 as described above. Since the positioning pins 70 are respectively fitted in the second end portions 672 of the through-holes 67 in the injection molding process, the second end portions 672 of the through-holes 67 are uncovered in the molded gear 27C. At the same time, the first end portions 671 and the intermediate portions 673 of the through-holes 67 are entirely filled with the parts 291 of the resin member 29 containing the cold slugs 38.

As described above, this embodiment has substantially the same construction as the second embodiment, except that the second end portions 672 of the through-holes 67 are uncovered. Therefore, the same effects as described in the second embodiments can be provided.
As described in the embodiments, at least the first end portion(s) of the recess(es) (the annular groove 37, the through-holes 67 or the annular groove 37B) is entirely filled with the part (s) 291 of the resin member 29. Thus, it is possible to provide the effect of capturing the cold slugs 38 in the recess(es) and the effect of reducing the variations in the size of the recess among individual metal cores. These effects can also be provided in the following variations in which the recess is modified.

In the second embodiment, at least a part of the innermost space of each of the through-holes 67 may be more spacious than the inlet (first end portion 671) of the through-hole 67. In this case, the cold slugs 38 captured in the recesses can be reliably prevented from flowing out of the recesses in the molding process as in the third embodiment.
In the second embodiment, it is also conceivable to employ, instead of the through-holes 67, holes (bottomed holes) each having a closed bottom and having a predetermined depth. The innermost space of the bottomed hole may have the same dimension as the inlet. Further, at least a part of the innermost space of the bottomed hole may be more spacious than the inlet as in the third embodiment. Where the innermost space of the recess is more spacious than the inlet, the cold slug 38 captured in the recess is more reliably prevented from flowing out of the recess. These variations of the second embodiment are applicable to the fourth embodiment.

It is also conceivable to employ, in combination, at least two of the various types of recesses according to the embodiments and the variations of the embodiments described above.
The first embodiment described above is directed to a case in which the intermediate product of the resin member 29 of the gear 27 is injection-molded from the melted resin with the metal core 28 inserted in the mold, but is not limited to this case. For example, the resin member 29 of the gear 27 of the first embodiment may be injection-molded as including the teeth 46 with the metal core 28 inserted in the mold. In this case, it is possible to provide the same effects as in the case in which the formation of the teeth 46 follows the molding of the intermediate product of the resin member 29.

The first embodiment is directed to a case in which the gear 27 is employed as the worm wheel. However, the gear 27 is applicable to gears other than the worm wheel, for example, to flat gears, helical gears, double helical gears, bevel gears, hypoid gears and the like. The gear 27 may be employed for a device other than the decelerator provided in the electric power steering system. The variations of the first embodiment may be applied to the other embodiments.

While the present invention has thus been described by way of the specific embodiments thereof, those skilled in the art and understanding the above disclosure will easily conceive variations, modifications and equivalents of the present invention. Therefore, the scope of the present invention should be defined by the appended claims and equivalents thereto.
This application corresponds to Japanese Patent Application No. 2010-67978 filed in the Japan Patent Office on March 24, 2010, and the disclosure of this application is incorporated herein by reference in its entirety.

### REFERENCE SIGNS LIST

27, 27A, 27B, 27C: Gear
28, 28A, 28B: Metal core
29: Resin member
32: Outer periphery (outer peripheral surface)
34: First side face
35: Second side face
37, 37B: Annular groove (recess)
38: Cold slug
42: Outer periphery of resin member
46: Teeth
56: Hot runners
67: Through-holes (recesses)
281: Center axis (center of metal core)
601: First part (of metal core)
602: Second part (of metal core)

## Claims

1. A gear comprising:
an annular metal core having a recess provided in a first side face thereof; and
an annular resin member molded on the metal core as covering an outer peripheral surface of the metal core and the first side face of the metal core and having teeth provided on an outer peripheral surface thereof by injecting a resin material toward the recess.

2. The gear according to claim 1, wherein the recess is an annular groove provided coaxially with the metal core in the first side face of the metal core.

3. The gear according to claim 2, wherein the resin material is injected from a plurality of hot runners disposed in opposed relation to the recess.

4. The gear according to claim 1, wherein the recess is a through-hole extending through the metal core between the first side face and a second side face of the metal core.

5. The gear according to any one of claims 1 to 4, wherein the recess is filled with the resin material containing a cold slug.

6. The gear according to any one of claims 1 to 5, wherein the metal core includes:
an annular first part formed with the recess with its outer periphery and its first side face portion covered with the resin member; and
an annular second part disposed inward of the first part with its first side face portion uncovered with the resin member.

7. The gear according to claim 6, wherein the first side face portion of the second part projects outward from the first side face portion of the first part.

8. The gear according to claim 6 or 7, wherein a second side face portion of the first part projects outward from a second side face portion of the second part.

## Amended claims

### Amended claims under Art. 19.1 PCT

1. (Amended) A gear comprising:
an annular metal core having a recess provided in a first side face thereof and a concavity provided in a second side face thereof; and
an annular resin member molded on the metal core as covering an outer peripheral surface of the metal core and the first side face of the metal core by injecting a resin material toward the recess, and having teeth provided on an outer peripheral surface thereof.

2. (Amended) The gear according to claim 2, wherein the resin material is injected from a plurality of hot runners disposed in opposed relation to the recess.

3. (Amended) The gear according to claim 1 or 2, wherein the recess is filled with the resin material containing a cold slug.

4. (Amended) The gear according to any one of claims 1 to 3, wherein the concavity is uncovered with the resin material to be exposed.

5. (Amended) The gear according to claim 1, wherein the recess is an annular groove provided coaxially with the metal core in the first side face of the metal core.

6. (Amended) The gear according to claim 1, wherein the recess is a through-hole extending through the metal core between the first side face and the second side face of the metal core.

7. (Cancelled)

8. (Cancelled)

Statement under Art. 19.1 PCT
According to the inventive aspect of claim 1, the metal core includes a recess (37, 67, 37B) provided in a first side face (34) thereof for capturing a cold slug, and a concavity (356) provided in a second side face (35) thereof for reduction in weight and costs. In Literature 1 (JP2001-289308A), the concavity is not found.
